# EUROPÄISCHE PATENTSCHRIFT

(11) **EP 0 898 879 B1**
(45) Veröffentlichungstag und Bekanntmachung des Hinweises auf die Patenterteilung: **02.05.2003**
(21) Anmeldenummer: 98115970.0
(22) Anmeldetag: 25.08.1998
(51) Int. Cl.: A01G 25/16

(54) **Vorrichtung zur programmgesteuerten Ausführung einer Funktion**
Device for controling a function by a programme
Dispositif pour contrôler une fonction par programme

(30) Priorität: 29.08.1997 DE 19737721
(43) Veröffentlichungstag der Anmeldung: 03.03.1999
(73) Patentinhaber: GARDENA Kress + Kastner GmbH, D-89079 Ulm (DE)
(72) Erfinder:
(74) Vertreter: Patentanwälte Ruff, Wilhelm, Beier, Dauster & Partner

(56) Entgegenhaltungen:
- EP-A- 0 236 535
- WO-A-86/06579
- FR-A- 2 636 205
- GB-A- 2 162 289
- US-A- 4 807 664

## Beschreibung

Die Erfindung betrifft eine Vorrichtung zur programmgesteuerten Ausführung einer Funktion, insbesondere ein programmgesteuertes Ventil zur Steuerung eines Flüssigkeitsstromes in einer Wasserleitung einer Gartenbewässerungsanlage, nach dem Oberbegriff von Anspruch 1.

Aus der US 4 807 664 A ist eine solche Vorrichtung bekannt.

Gattungsgemäße Vorrichtungen führen eine oder mehrere mechanische Funktionen aus, die insbesondere nach einem vorgebbaren Zeitprogramm ablaufen können. Typische Anwendungsbeispiele im Bereich der Haus- und Gartenbewässerung sind programmgesteuerte Beregnungsvorrichtungen oder programmgesteuerte Absperr- und/oder Verteilungsventile, die in Flüssigkeits-Leitungen und/oder Flüssigkeits-Leitungsnetzen vorgesehen sind. Eine gattungsgemäße Vorrichtung hat eine mittels einer Programmeinrichtung programmierbare elektronische Steuerung zur Abgabe von elektrischen Steuersignalen und eine durch die Steuersignale ansteuerbare, vorzugsweise elektrisch betreibbare Einrichtung zur Ausführung der Funktion.

Eine aus der US-Patentschrift 4 108 419 bekannte gattungsgemäße Vorrichtung ist ein Ventil eines automatischen Beregnungssystems. Die Steuerung des Ventils sowie die zur Programmierung der Steuerung vorgesehene Programmiereinrichtung sind in einem von dem eigentlichen Ventilgehäuse abnehmbaren Gehäusekopf untergebracht, in dem auch die Batterien zur elektrischen Leistungsversorgung der Programmier- und Steuereinheit untergebracht sind. An dem abnehmbaren Gehäusekopf sind Drehschalter zur manuellen Einstellung des jeweils gewünschten Beregnungs-Zeitprogrammes vorgesehen. Die vom Ventilgehäuse abnehmbare Steuer- und Programmiereinheit ist relativ schwer und groß und wegen ihres komplexen Aufbaus in der Herstellung teuer. Die Anzahl der über die Drehknöpfe anwählbaren, in einer elektronischen Schaltung verkörperten Programme ist begrenzt.

Ähnlich kompliziert aufgebaute, von angesteuerten Flüssigkeitsventilen abnehmbare kombinierte Steuer- und Programmiereinheiten sind auch aus der europäischen Patentschrift EP 0 236 535 und aus der Veröffentlichung BUREAUX D'ETUDES AUTOMATISMES, Nr. 19, September 1985, Seite 19, Paris, FR; "Arrosage programmé et capteurs en bois", bekannt.

Bei den bekannten Steuer- und Programmiereinheiten ist die Anzahl der in ihren Steuerungen verkörperten Programme begrenzt. Zwischen den Programmen kann gewählt werden, die Programme selbst sind jedoch nicht veränderbar. Wenn die Funktion nach einem anderen, nicht eingebauten Programm ablaufen soll, dann muß die gesamte Programmier- und Steuereinheit ersetzt werden. Wird eine Reparatur oder eine Ersetzung der in feuchter Umgebung ggf. störanfälligen Programmier- und Steuereinheit notwendig, so muß ebenfalls die gesamte Baugruppe ausgebaut und ggf. als Ganzes ersetzt werden.

Der Erfindung liegt die Aufgabe zugrunde, eine gattungsgemäße Vorrichtung zu schaffen, die wirtschaftlich herstellbar und bei nur geringem Bedienungsaufwand variabel einsetzbar ist. Insbesondere soll die Vorrichtung auch wartungs- und reparaturfreundlich sein und/oder es soll eine einfache, ortsungebundene Programmierung, beispielsweise am Ort einer im Garten fest installierten Funktionseinheit ermöglicht werden.

Zur Lösung dieser Aufgabe schlägt die Erfindung eine Vorrichtung mit den Merkmalen von Anspruch 1 vor.

Nach der Erfindung ist die Steuerung einer Steuereinheit zugeordnet, die ggf. ausschließlich aus der Steuerung bestehen kann, normalerweise aber weitere funktionelle Teile, jedoch keine Programmiereinrichtung enthält. Die Steuereinheit ist mechanisch und elektrisch lösbar mit einer die Einrichtung aufweisenden Funktionseinheit verbindbar. Die Funktionseinheit kann im wesentlichen ausschließlich die anzusteuernde Einrichtung umfassen, enthält aber in der Regel weitere funktionelle Teile. Die Programmiereinrichtung ist einer separaten Programmiereinheit zugeordnet, die mechanisch und elektrisch lösbar mit der Steuereinheit verbindbar ist und die vorzugsweise auch separat von der Funktionseinheit ist. Die Vorrichtung nach der Erfindung ist modular aufgebaut. Die zusammenwirkenden Module, d.h. die Steuereinheit, die Programmiereinheit und die Funktionseinheit können insbesondere vollständig elektrisch und mechanisch voneinander getrennt werden.

Die durch die Programmiereinheit programmierbare Steuerung der Steuereinheit kann vorteilhaft mit einer Vielzahl verschiedener Funktionseinheiten verwendet werden. Die Steuereinheit kann z.B. von einem Flüssigkeitsventil abgenommen und, ggf. nach Umprogrammierung, zur Steuerung einer Pumpe, einer Gartenbeleuchtung, einer Balkonbewässerung oder als Schalterersatz an einer Wand oder dergleichen eingesetzt werden. Zur Programmierung kann jeweils die gleiche Programmiereinheit genutzt werden.

Die Funktionseinheit kann beispielsweise ein in einer Flüssigkeitsleitung fest oder lösbar eingebautes Ventil umfassen. Der Verbleib der Funktionseinheit an ihrem Funktionsort ist bei fest mit einem Leitungssystem verbundenen Ventilen praktisch unumgänglich. Auch bei lösbarer Verbindung sollte sie jedoch nur in Ausnahmefällen gelöst werden, da sonst unter Umständen bei der Wiederherstellung der Verbindung Dichtigkeitsprobleme auftreten können. Bei einer erfindungsgemäßen Vorrichtung kann die Funktionseinheit an dem Leitungssystem verbleiben, während die Steuereinheit weggenommen und ggf. weit entfernt von der Funktionseinheit repariert oder umprogrammiert oder ggf. gegen eine andere Steuereinheit ausgewechselt werden kann. Mit Vorteil kann eine Neuprogrammierung einfach durch Austausch einer Steuerung durch eine nach einem anderen Programm arbeitende Steuerung erfolgen, was zum Beispiel bei Umsteigen auf eine neuere Version einer Steuerung oder eines Programmes von Vorteil ist. Die Funktionseinheit und die Programmiereinheit können unverändert weiterverwendet werden. Die gleichen Vorteile sind auch beim Austausch defekter Steuerungen oder bei einem Ausbau der Steuerungen für eine eingehende Funktionsprüfung im Rahmen von Wartungsarbeiten erzielbar. Da die Steuereinheit die programmierbare Steuerung, nicht aber die zu ihrer Programmierung vorgesehene Programmiereinrichtung enthält, kann sie sehr kostengünstig hergestellt werden und leicht und kompakt sein. Ein ggf. erforderlicher Austausch einer defekten Steuerung erfaßt nicht die Programmiereinrichtung, was zum Beispiel aus Gründen der Wirtschaftlichkeit und des Umweltschutzes von Vorteil ist.

Es ist möglich, die zusammenwirkenden Module mittels einer oder mehrerer Schrauben zu verbinden. Bei einer bevorzugten Ausführungsform ist vorgesehen, daß die Steuereinheit werkzeuglos, d.h. ohne Zuhilfenahme von Werkzeugen wie Schraubendrehern oder dergleichen, mit der Funktionseinheit und/oder der Programmiereinheit verbindbar und/oder werkzeuglos von diesen lösbar ist. Bei solchen Ausführungsformen ist der Bedienungsaufwand beim Abnehmen bzw. Anbringen der Steuereinheit an der Funktionseinheit und/oder der Programmiereinheit besonders gering.

Vorzugsweise kann die Steuereinheit an oder in der Funktionseinheit und/oder der Programmiereinheit festklemmbar sein. Dazu können an der Funktionseinheit bzw. der Programmiereinheit und/oder an der Steuereinheit gesonderte zusammenwirkende Klemmeinrichtungen vorgesehen sein. Vorzugsweise sind die Steuereinheit und die Funktionseinheit und/oder die Programmiereinheit selbst derart ausgebildet, daß sie aneinander festklemmbar, insbesondere aneinander feststeckbar sind. Es kann mindestens ein elastisches Element zur kraftschlüssigen Halterung der Steuereinheit an der Funktionseinheit und/oder der Programmiereinheit vorgesehen sein, das vorzugsweise ein elastisch komprimierbares Dichtelement wie zum Beispiel ein Kunststoff-O-Ring sein kann. Die mechanische Verbindung der Module kann ausschließlich durch eine kraftschlüssige Verbindung, beispielsweise ein Verklemmen gegen Auseinanderziehen der Bauteile bewirkt werden. Alternativ oder zusätzlich kann die Steuereinheit mit der Funktionseinheit und/oder der Programmiereinheit formschlüssig verbindbar sein, beispielsweise durch Klammern oder Schrauben. Eine formschlüssige Verbindung kann zuverlässig ein unbeabsichtigtes Lösen von Steuereinheit und Funktionseinheit bzw. Programmiereinheit verhindern.

Eine Ausführungsform zeichnet sich dadurch aus, daß die Steuereinheit ein die Steuerung mindestens bereichsweise flüssigkeitsdicht abdeckendes Gehäuse hat, welches vorzugsweise aus Kunststoff besteht. Das Gehäuse kann mehrteilig sein und insbesondere zwei lösbar miteinander verbindbare, vorzugsweise miteinander verschraubbare Gehäuseteile aufweisen. Das Gehäuse bzw. die Gehäuseteile können im Spritzgußverfahren hergestellt sein. Ein die Steuerung mindestens teilweise umschließendes Gehäuse kann diese weitgehend vor Beschädigungen schützen. Bei einem mehrteiligen Gehäuse kann die Steuerung durch die mechanische Verbindung der Gehäuseteile klemmend am Gehäuse festgelegt werden, wodurch gesonderte Befestigungsmittel für die Steuerung im Gehäuse entfallen können.

Die Steuerung kann mindestens bereichsweise feuchtedicht versiegelt sein, wobei die Steuerung vorzugsweise als Leiterplatte mit elektronischen Bauelementen ausgebildet ist, die von einer feuchtedichten Vergußmasse umgeben sind. Die Vergußmasse kann die mit den Bauteilen bestückte Seite der Leiterplatte vorzugsweise vollständig bedecken und ggf. die gegenüberliegende, mit Leiterbahnen versehene Seite zur Kontaktierung frei lassen. Eine fest in Kontakt mit der Leiterplatte stehende Schicht aus Vergußmaterial stabilisiert die Leiterplatte zusätzlich mechanisch.

Die Steuereinrichtung kann mindestens ein Betätigungsglied zur manuellen Schaltung der Steuerung haben, über das beispielsweise ein Ventil von einer Sperrstellung in eine Durchlaßstellung und zurück umgeschaltet werden kann. Es ist auch möglich, ein oder mehrere Betätigungsglieder derart mit der Schaltung zu koppeln, daß über die Betätigungsglieder das Steuerprogramm ein- oder ausgeschaltet wird und/oder daß zwischen verschiedenen Steuerprogrammen umgeschaltet werden kann. Das Betätigungsglied kann über eine Gehäusewand des Gehäuses der Steuereinheit hinausragen. Ein Betätigungsglied kann insbesondere als Tipp-Schalter ausgebildet sein. Vorzugsweise ist es derart flüssigkeitsdicht abgedichtet, daß im Bereich des Betätigungsgliedes keine Flüssigkeit in das Gehäuse eindringen kann.

Zur Ausübung der Steuerungsfunktion muß die Steuerung signalleitend, insbesondere elektrisch leitend mit der Einrichtung verbunden werden. Dazu hat bei einer bevorzugten Ausführungsform die Steuereinheit erste Kontaktmittel zur Herstellung einer lösbaren, signalleitenden elektrischen ersten Verbindung der Steuerung mit der Einrichtung. Die erste Verbindung ist dazu vorgesehen, Signalspannungen zu übertragen. Die Einrichtung ist mit entsprechenden komplementären Kontaktmitteln ausgestattet, die zum Zusammenwirken mit den die Steuersignale übertragenden ersten Kontaktmitteln ausgebildet sind. Eine Weiterbildung der Erfindung sieht vor, daß die ersten Kontaktmittel als Teil einer ersten elektrischen Steckverbindung ausgebildet sind, wobei die ersten Kontaktmittel vorzugsweise als Teil einer vorzugsweisen zweipoligen Koaxial-Steckverbindung ausgebildet sind. Vorzugsweise ist ein innerer Kontaktstift vorgesehen, der von einer äußeren Kontakthülse umgeben ist. Eine Koaxial-Steckverbindung für die Signalleitung ist besonders unanfällig gegen insbesondere elektromagnetische Störungen. Die korrspondierenden Kontaktmittel der Funktionseinheit sind komplementär ausgebildet. Sie weisen insbesondere eine zur Kontaktierung des Kontaktstiftes vorgesehene zentrische Hülse und eine zum Ineinanderschieben mit der Kontakthülse vorgesehene äußere Hülse auf. Die Anordnung von Steckern auf der einen und Buchsen auf der anderen Seite der Steckverbindung ist jedoch auch umgekehrt möglich. Die erste Steckverbindung bewirkt neben der elektrischen Verbindung auch eine kraftschlüssige mechanische Verbindung der Module, so daß ggf. gesonderte mechanische Verbindungsmittel entfallen können.

Es ist möglich, für die Steuerung eine eigene Leistungsversorgung vorzusehen, beispielsweise eine im Gehäuse der Steuereinheit untergebrachte Batterie. Bei einer bevorzugten Ausführungsform hat die Steuereinheit keine eigene elektrische Leistungsversorgung für die Steuerung. Eine derartige Steuereinheit ist besonders kompakt und kostengünstig herstellbar und eine ggf. erforderliche Auswechslung der Steuereinheit erfaßt nicht die Leistungsversorgung für die Steuereinheit. Bei einer bevorzugten Ausführungsform hat die Steuereinheit zweite Kontaktmittel zur Herstellung einer lösbaren zweiten elektrischen Verbindung der Steuerung mit einer externen Leistungsversorgung, beispielsweise einem Akkumulator oder einer Batterie. Die zweite elektrische Verbindung ist vorzugsweise für Übertragung von Gleichspannungen im Volt-Bereich ausgelegt. Es ist bevorzugt, wenn die zweiten Kontaktmittel als Teil einer zweiten elektrischen Steckverbindung ausgebildet sind. Die zweite Steckverbindung kann eine insbesondere zweipolige Flach-Steckverbindung sein. Vorzugsweise sind mit der Steuerung Flach-Steckbuchsen verbunden, die zum Zusammenwirken mit entsprechenden flachen Steckzungen ausgebildet sind, die in Kontakt mit der externen Leistungsversorgung stehen. Auch hier ist die Anordnung von Steckern auf der einen und Buchsen auf der anderen Seite der zweiten Steckverbindung umkehrbar.

Die Leistungsversorgung für die Steuerung und/oder die Funktionseinheit kann gesondert von der Steuereinheit und ggf. gesondert von der Funktionseinheit angeordnet sein. Vorzugsweise hat die Funktionseinheit eine vorzugsweise netzunabhängige eigene Leistungsversorgung für die Einrichtung, die insbesondere mindestens einen Akkumulator umfaßt. Diese Leistungsversorgung stellt die elektrische Energie zum Betreiben der elektrischen Einrichtung zur Ausführung der gewünschten Funktion zur Verfügung. Vorzugsweise ist die Leistungsversorgung der Funktionseinheit gleichzeitig eine externe Leistungsversorgung für die Steuereinheit. Die Leistungsversorgung kann hierzu elektrisch mit Kontaktmitteln verbunden sein, die zum Zusammenwirken mit den zweiten Kontaktmitteln der Steuereinheit ausgebildet sind. Bei der Verbindung von Steuereinheit und Funktionseinheit kann über die Kontaktmittel eine elektrische Verbindung der Leistungsversorgung der Funktionseinheit zur Steuerung hergestellt werden.

Eine externe Programmiereinrichtung muß nur bei der Programmierung mit der Steuerung verbunden sein und kann während des normalen Betriebes der Vorrichtung gesondert von dieser aufbewahrt oder ggf. zur Programmierung anderer Steuerungen eingesetzt werden. Es ist möglich, die Programmiereinrichtung über einen speziell für die Programmierung vorgesehenen elektrischen Anschluß mit der Steuerung zu verbinden. Bei einer bevorzugten Ausführungsform hat die Programmiereinheit elektrische Kontaktmittel, die zum Zusammenwirken mit den ersten Kontaktmitteln der Steuereinheit ausgebildet sind, insbesondere als Teil einer Koaxial-Steckverbindung. Diese Kontaktmittel sind mit der signalgebenden Elektronik der Programmiereinrichtung verbunden. Dadurch ist es möglich, den Kontakt, der im Betrieb der Vorrichtung zur Übertragung von Signalen zwischen Steuereinheit und Funktionseinheit verwendet wird, ebenfalls für die Programmierung zu verwenden. Ein gesonderter Anschluß an der Steuereinheit, der ggf. gesondert abgedichtet werden müßte, kann daher entfallen. Die Kontaktmittel der Programmiereinheit können an einem an die Programmiereinheit anschließbaren Kabel vorgesehen sein, sind jedoch vorzugsweise direkt an einem Gehäuse der Programmiereinheit vorgesehen.

Eine bevorzugte Programmiereinheit hat eine vorzugsweise netzunabhängige eigene Leistungsversorgung, die vorzugsweise mindestens einen Akkumulator umfaßt. Die Leistungsversorgung der Programmeinheit kann mit Vorteil elektrisch mit Kontaktmitteln verbunden sein, die zum Zusammenwirken mit den zweiten Kontaktmitteln der Steuereinheit ausgebildet sind, insbesondere Flach-Steckzungen. Eine derartige Ausführung ermöglicht es, die Leistungsversorgung der Programmiereinheit als Leistungsversorgung der Steuereinheit zu verwenden, insbesondere bei der Programmierung der Steuerung. Die elektrische Verbindung der elektrischen Kontakte der Programmiereinrichtung mit denen der Steuereinheit kann über Kabel erfolgen. Vorzugsweise erfolgt sie jedoch kabellos. Insbesondere kann die Programmiereinheit derart ausgebildet sein, daß sie mechanisch und elektrisch lösbar mit der Steuereinheit verbindbar, insbesondere zusammensteckbar ist. Sie kann gleichzeitig als Halterung für die Steuereinheit während der Programmierung wirken.

Diese sehr einfache Handhabung wird unter anderem dadurch gefördert, daß die ersten Kontaktmittel und die zweiten Kontaktmittel der Steuereinrichtung eine Steuereinrichtungs-Kontaktanordnung bilden, die zum Zusammenwirken mit einer komplementären Funktionseinheits-Kontaktanordnung der Funktionseinheit ausgebildet ist. Vorzugsweise hat die Programmiereinrichtung eine Programmiereinrichtungs-Kontaktanordnung, die im wesentlichen der Funktionseinheits-Kontaktanordnung entspricht, so daß die Steuereinrichtung in gleicher Weise sowohl an die Funktionseinheit wie an die Programmiereinrichtung elektrisch angeschlossen werden kann.

Zur Programmierung können an sich beliebige Programmiereinrichtungen vorgesehen sein, da die Programmierung nicht am Ort der Funktionseinheit vorgenommen werden muß. Es kann beispielsweise ein ortsfestes Programmiergerät vorgesehen sein, über welches beispielsweise eine Programmierung unter Verwendung eines Computers erfolgen kann. Vorzugsweise ist die Programmiereinheit als tragbares, vorzugsweise handgehaltenes Programmiergerät ausgebildet. Sie kann einen hohlen Handgriff aufweisen, in dem beispielsweise Batterien oder Akkumulatoren zur Leistungsversorgung der Programmiereinheit und ggf. einer an die Programmiereinheit angeschlossenen Steuereinheit vorgesehen sind. Durch eine tragbare Programmiereinrichtung kann die Programmierung der Steuereinheit direkt am Einsatzort der Vorrichtung vorgenommen werden, indem lediglich die Steuereinheit von der Funktionseinheit abgenommen und an das Programmiergerät angeschlossen bzw. angekoppelt und nach Abschluß der Programmierung wieder an die Funktionseinheit angeschlossen bzw. angekoppelt wird.

Bei einer bevorzugten Ausführungsform ist es von besonderem Vorteil, daß die erste elektrische Verbindung und die zweite elektrische Verbindung durch eine einzige Relativbewegung der Steuereinheit relativ zur Funktionseinheit oder zu der Programmiereinheit in eine gemeinsame Verbindungsrichtung lösbar oder herstellbar ist. Die ersten und die zweiten Kontaktmittel werden dadurch im wesentlichen gleichzeitig mit den korrespondierenden Kontaktmitteln von Funktionseinheit oder Programmiereinheit elektrisch verbunden. Vorzugsweise reicht eine im wesentlichen geradlinige Steckbewegung in einer gemeinsamen Steckrichtung aus. Hierzu sind die Steckachsen der ersten und der zweiten Steckverbindung im wesentlichen parallel.

Insbesondere bei Einsätzen in feuchter oder nasser Umgebung, beispielsweise im Bereich von Bewässerungsanlagen und/oder dort, wo die Funktionseinrichtung teilweise oder ganz im ggf. feuchten Erdreich eingegraben ist, ist eine Ausführungsform von Vorteil, bei der die erste elektrische Verbindung und/oder die zweite elektrische Verbindung im verbundenen Zustand von Steuereinheit und Funktionseinheit und vorzugsweise auch dann, wenn Steuereinheit und Programmiereinheit verbunden sind, flüssigkeitsdicht abgedichtet sind. Hierzu können für jede Verbindung gesonderte Dichteinrichtungen vorgesehen sein, vorzugsweise erfolgt die Abdichtung jedoch durch eine die erste und die zweite elektrische Verbindung gemeinsam umschließende Dichteinrichtung. Die Dichteinrichtung kann vorzugsweise ein elastisch kompressibles Dichtelement, wie einen O-Ring, aufweisen, der neben der Dichtfunktion auch eine Funktion im Rahmen einer kraftschlüssigen Halterung der Steuereinheit an der Funktionseinheit bzw. an der Programmiereinheit ausübt.

Weitere Merkmale und Einzelheiten der Erfindung ergeben sich aus der nachfolgenden Beschreibung einer bevorzugten Ausführungsform in Verbindung mit den Zeichnungen und den Unteransprüchen. Hierbei können die einzelnen Merkmale jeweils für sich allein oder zu mehreren in Kombination miteinander bei einer Ausführungsform verwirklicht sein. Ausführungsbeispiele der Erfindung werden in den Zeichnungen dargestellt und im folgenden näher erläutert. In den Zeichnungen zeigen:
- Fig. 1: eine Seitenansicht in teilweisem Schnitt einer Ausführungsform der Erfindung, bei der die Funktionseinheit ein in einem Ventilschacht angeordnetes elektromagnetisches Flüssigkeits-Absperrventil ist,
- Fig. 2: eine Draufsicht auf die in Fig. 1 gezeigte Steuereinheit von der Seite der zur Verbindung mit der Funktionseinheit vorgesehenen elektrischen Kontaktanordnung,
- Fig. 3: einen Querschnitt durch die Steuereinheit entlang der Linie III-III in Fig. 2, und
- Fig. 4: eine schematische, perspektivische Ansicht einer bevorzugten Ausführungsform einer Programmiereinheit für die Steuereinheit in den Figuren 1 bis 3.

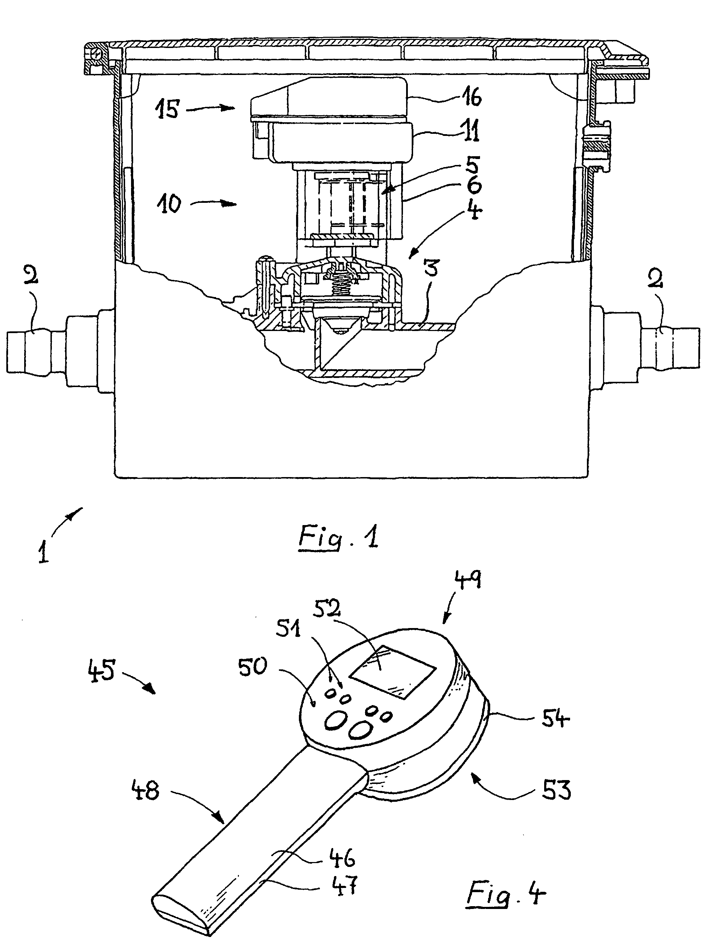

Die teilweise geschnittene Seitenansicht in Fig. 1 zeigt einen durch ein im wesentlichen kastenförmiges Kunststoff-Gehäuse gebildeten, mittels eines Klappdeckels verschließbaren Schacht 1, der insbesondere auch zur teilweisen oder fast vollständigen Versenkung in Erdreich geeignet und bestimmt ist. Der Schacht kann über achsparallele Rohr-Anschlußstücke 2 an vorzugsweise geringfügig elastische Kunststoff-Rohrleitungen eines vorzugsweise unterirdich verlegbaren Wasserleitungsnetzes angeschlossen werden.

Ein Schacht der gezeigten Art und seine Verwendungsmöglichkeiten sind beispielsweise in der deutschen Patentschrift DE 39 24 795 beschrieben. Im durch die Gehäusewände begrenzten Inneren des Schachtes verläuft ein die Anschlußstücke 2 verbindendes Kunststoff-Rohrstück 3, an dem etwa mittig zwischen den Anschlußstücken ein elektromagnetisch betätigbares, zum Unterbrechen des Flüssigkeitsstromes im Rohrstück 3 vorgesehenes Absperrventil 4 angeschraubt ist. Zur Schaltung des Absperrventils zwischen Schließstellung und Durchlaßstellung ist ein Elektromagnet 5 vorgesehen, der elektrisch mit einer nicht gezeigten elektrischen Leistungsversorgung verbunden ist, die einen Akkumulator umfaßt und die in einem das Ventil 4 und den Elektromagneten 5 umschließenden Kunststoffgehäuse 6 untergebracht ist. Das elektromagnetisch schaltbare Absperrventil 4 bildet eine in den Flüssigkeitsstrom des Rohrstückes 3 eingreifende Einrichtung zur Ausführung einer mechanischen Funktion, nämlich des Öffnens und Schließens eines Flüssigkeitsdurchlasses. Zusammen mit dem Elektromagneten und der Leistungsversorgung bildet es eine Funktionseinheit 10, die auch als Magnetventil-Anordnung oder als Magnetventil-Baugruppe bezeichnet wird.

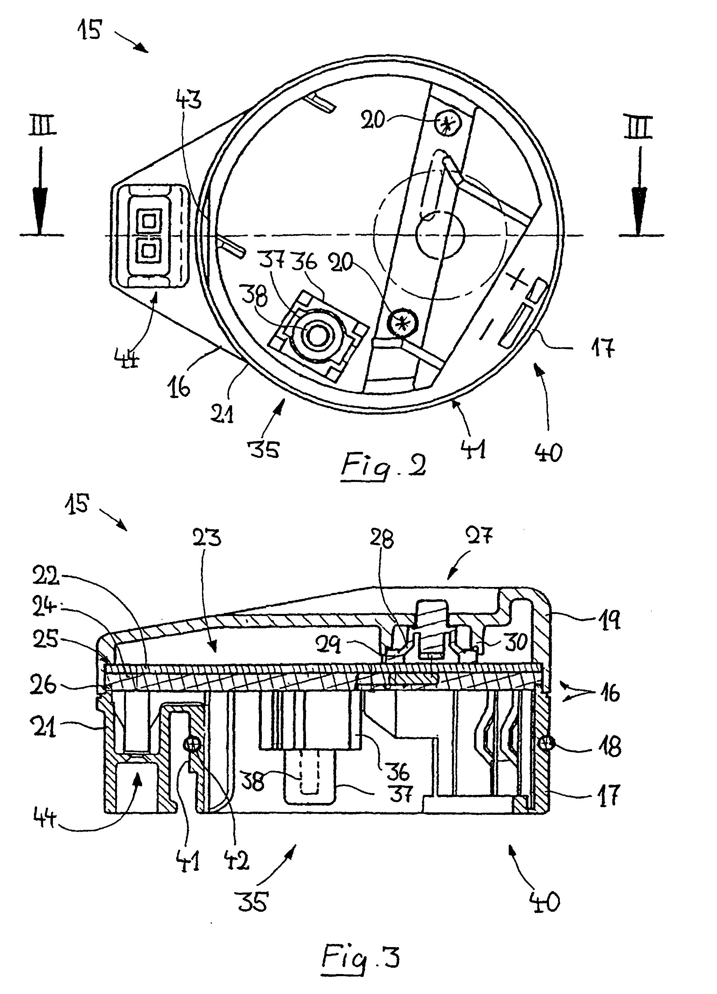

Auf einen nach oben geöffneten topfförmigen, eine im wesentlichen zylindrische Innenseite aufweisenden oberen Ansatz 11 der Funktionseinheit 10 ist nach Art eines flüssigkeitsdicht abgedichteten Netzkabel-Steckers eine vollständig elektrisch und mechanisch von der Funktionseinheit lösbare Steuereinheit 15 aufgesteckt. Zum Aufstecken oder Abnehmen der Steuereinheit 15 wird der Klappdeckel des Ventilschachtes geöffnet. Im gezeigten, geschlossenen Zustand des Klappdeckels liegt dessen ebene Unterseite in einem geringen Abstand oberhalb der flachen Oberseite der Steuereinheit 15, so daß ein Lösen der Steuereinheit von der Funktionseinheit nicht möglich ist. Im in Fig. 1 dargestellten zusammengebauten Zustand von Steuereinheit und Funktionseinheit ist das in den Figuren 2 und 3 gezeigte Innere der Steuereinheit durch ein in Fig. 3 besser zu erkennendes, nach oben im wesentlichen geschlossenes Gehäuse 16 und durch eine am äußeren Umfang eines zylindrischen Ansatzes 17 der Steuereinheit umlaufenden Dichtring 18, der gegen die zylindrische Innenseite des Ansatzes 11 drückt, vollständig gegen äußeren Feuchtigkeitseinfluß abgedichtet.

Die Steuereinheit hat ein zweiteiliges Kunststoff-Gehäuse 16, das durch einen in Fig. 3 nach unten geöffneten, einseitig angeschrägten Gehäusedeckel 19 und ein daran durch Schrauben 20 angeschraubtes Adaptionsteil 21 gebildet ist, das zum Zusammenstecken mit dem zylindrischen Ansatz 11 der Funktionseinheit 10 vorgesehen ist. Zwischen den beiden Gehäuseteilen 19, 21 ist eine Leiterplatte 22 eingeklemmt, auf deren dem Gehäusedeckel 19 abgewandten Seite nicht gezeigte Elektronik-Bauelemente angebracht sind. Durch die durch Leiterbahnen verbundenen Elektronik-Bauelemente ist die extern programmierbare Steuerung 23 der Steuereinheit verkörpert. Die Elektronikelemente sind zum Schutz gegen Feuchtigkeit mit einer Schicht 24 aus einer feuchtedichten Kunststoff-Vergußmasse bedeckt, die die Bauelemente umschließt und gleichzeitig zur mechanischen Stabilisierung der Leiterplatten-Anordnung beiträgt. Die Leiterplatten-Anordnung 22, 24 wird beim Einbau in die Steuereinheit auf einen umlaufenden, stufenförmigen, nach innen gerichteten Vorsprung 25 des Gehäusedeckels 19 gelegt und durch Anschrauben des einen stirnseitigen Vorsprung 26 aufweisenden Adaptionsteils 21 lagefixiert zwischen Gehäusedeckel 19 und Adaptionsteil 21 eingeklemmt. Zur Befestigung der Steuerung sind somit keine gesonderten Befestigungsmittel, wie Schrauben oder dergleichen, notwendig. Eine Auswechslung der Steuerung erfolgt auf einfache Weise durch Auseinanderschrauben der beiden Gehäuseteile 19, 21, Herausnehmen der Steuerung 23 und Ersetzen durch eine andere Steuerung.

Auf der dem Deckel 19 zugewandten Seite der Leiterplatte 22 ist bei der gezeigten Ausführungsform ein Kontakt zur manuellen Betätigung der Steuerung vorgesehen, der über einen Tippschalter 27 betätigt werden kann. Der Tipp-Schalter 27 ist als die Oberseite des Deckels 19 geringfügig überragende Gummitaste ausgebildet, an der ein elastischer Konus 28 mit einem ringförmigen, im Querschnitt etwa quadratischen Fuß 29 ausgebildet ist. Der Fuß 29 wird im zusammengebauten Zustand der Gehäuseteile durch einen ringförmigen Ansatz 30 des Gehäusedeckels dichtend auf die Oberseite der Leiterplatte gedrückt und dichtet die Kontaktstelle feuchtigkeitsdicht ab. Über das Betätigungsglied 27 kann die Steuerung 23 manuell geschaltet werden, beispielsweise zur Umschaltung zwischen einer Schließstellung und einer Durchlaßstellung des Absperrventils 4. Der Tipp-Schalter 27 ist bei geöffnetem Deckel des Schachtes einfach zugänglich.

Die elektrische Kontaktierung der auf der Leiterplatte 22 untergebrachten elektronischen Steuerung 23 erfolgt im wesentlichen über zwei getrennte Steckkontaktgruppen, die mit den Leiterbahnen der Leiterplatte elektrisch leitend verbunden sind. Die Steckkontakte sind durch die Vergußmassenschicht 24 festgehalten und ragen aus der Vergußmasse zur deckelabgewandten Seite heraus. Es sind erste elektrische Kontaktmittel 35 zur Herstellung einer lösbaren, signalleitenden ersten Verbindung der Steuerung mit komplementären Kontaktmitteln der Funktionseinheit und vorzugsweise einer später beschriebenen Programmiereinheit vorgesehen. Aus einem fest an der Leiterplatten-Anordnung angebrachten, rechtwinkligen Kontaktfuß 36 ragt eine zylindrische, metallische Kontakthülse 37 heraus, die einen axial etwas kürzeren runden metallischen Kontaktstift 38 umgibt. Der Koaxialstecker 35 dient der signalleitenden Übertragung von Steuersignalen von der Steuerung 23 zu dem durch die Steuersignale angesteuerten Magnetventil 4, wenn Steuereinheit 15 und Funktionseinheit 10 zusammengesteckt sind. Er dient weiterhin der signalleitenden elektrischen Verbindung zu einer Programmiereinrichtung, mit der ein in der Steuerung 23 verkörpertes Steuerprogramm für das Ventil bei Bedarf geändert werden kann.

Die Steuereinheit hat keine eigene elektrische Leistungsversorgung für die Steuerung. Für den Anschluß einer externen Leistungsversorgung sind im Kontakt mit der Steuerung 23 stehende, aus der Vergußmasse herausragende zweite Kontaktmittel 40 vorgesehen, die als Steckbuchsen eines zweipoligen Flach-Steckkontaktes ausgebildet sind. Die Steckachsen des Koaxialsteckers 35 und der Flach-Steckbuchse 40 sind parallel, so daß beide elektrische Verbindungen durch eine gemeinsame Steckbewegung parallel zu den Steckachsen hergestellt bzw. gelöst werden kann. Die Funktionseinheit 10 hat mit den Flach-Steckbuchsen 40 zusammenwirkende flache Steckzungen, die elektrisch mit der Leistungsversorgung der Funktionseinheit verbunden sind, so daß die Leistungsversorgung der Funktionseinheit gleichzeitig auch die Leistungsversorgung der Steuereinheit ist, wenn diese auf die Funktionseinheit aufgesteckt ist. Da die Steuereinheit keine eigene elektrische Leistungsversorgung benötigt, kann sie besonders leicht sein und kostengünstig hergestellt werden.

Die ersten Kontaktmittel 35 und die federbelasteten zweiten Kontaktmittel 40 der Steuereinheit bilden eine Steuereinheits-Kontaktanordnung, die mit einer im wesentlichen spiegelbildlich angeordneten komplementären Funktionseinheits-Kontaktanordnung zusammenwirkt. Die elektrische Kontaktierung der Steckverbindungen allein kann schon ausreichen, die Steuereinheit und die Funktionseinheit auch kraftschlüssig mechanisch zu verbinden. Die beim Herstellen der Steckkontakte aneinander gleitenden und aneinander reibenden Kontaktflächen reinigen sich zusätzlich gegenseitig selbst von Verunreinigungen, wie zum Beispiel Oxidationsfilmen, so daß auch in feuchter Umgebung jederzeit ein guter elektrischer signalleitender und Versorgungsstrom leitender elektrischer Kontakt zwischen Steuereinheit und Funktionseinheit gewährleistet ist.

Eine lösbare mechanische Verbindung zwischen Steuereinheit und Funktionseinheit wird weiterhin durch die Formen der ineinander steckbaren Gehäuse von Steuereinheit 15 und Funktionseinheit 10 geschaffen. Der zylindrische Ansatz 17 des Adaptionsteils 21 hat hierzu eine im wesentlichen zylindrische Außenseite 41, deren Außendurchmesser dem Innendurchmesser des zylindrischen Ansatzes 11 der Funktionseinheit entspricht. Dadurch wird bei Ineinanderschieben der Ansätze 17, 11 ineinander eine axiale Führung in einer Zusammensteckrichtung erreicht und der die Kontakte 35, 40 und die komplementären Kontakte umschließende Kontaktraum wird schon weitgehend abgedichtet. Zur vollständigen flüssigkeitsdichten Abdichtung im zusammengesteckten Zustand hat die Steuereinheit einen um den Ansatz 17 in einer umlaufenden, halbkreisförmigen Nut 42 liegenden Dichtring 18, der beim Zusammenstecken von Steuereinheit und Funktionseinheit an die Innenseite des Ansatzes 11 angepreßt wird und so den Kontaktraum flüssigkeitsdicht abdichtet. Der kompressible Dichtring 18 fördert gleichzeitig eine kraftschlüssige mechanische Verbindung zwischen Steuereinheit und Funktionseinheit gegen Auseinanderziehen der Bauteile 10, 15. Bei der gezeigten Ausführungsform verlaufen die Zusammensteckrichtung zur mechanischen Verbindung der Ansätze 11, 17 und die Steckrichtungen der elektrischen Steckkontakte im wesentlichen parallel, so daß durch eine einzige Steckbewegung sowohl die mechanische, als auch die elektrische Verbindung zwischen Steuereinheit und Funktionseinheit herstellbar und durch eine entgegengesetzte Bewegung wieder auflösbar ist. Eine tangential zum Ansatz 17 verlaufende, ebene Führungsfläche 43, die mit einer komplementären ebenen Führungsfläche des Ansatzes 11 zusammenwirkt, sorgt dafür, daß die Steuereinheit 15 nur in einer einzigen Drehstellung auf den Ansatz 11 der Funktionseinheit aufgesteckt werden kann. Dadurch wird eine sonst eventuell mögliche mechanische Beschädigung der elektrischen Kontaktmittel zuverlässig verhindert.

An dem Adaptionsteil 21 ist außerhalb des abdichtbaren Ansatzes im Bereich der Führungsfläche 43 eine zweipolige Steckbuchse 44 angeordnet, die auch im zusammengesetzten Zustand von Steuereinheit und Funktionseinheit zugänglich ist. Die Kontakte 44 stehen in Verbindung zur Steuerung 23 und dienen dem optionalen Anschluß eines extern anbringbaren Feuchtigkeitssensors. Dieser kann beispielsweise nach ausgiebigen Regenfällen ein Signal an die Steuerung geben, mit der der Programmablauf einer Beregnungseinrichtung unterbrochen und erst später wieder fortgesetzt wird.

Der beschriebenen Ausführungsform der Erfindung ist die in Fig. 4 schematisch gezeigte Programmiereinheit 45 zugeordnet. Die Programmiereinheit ist als tragbares, handgehaltenes Programmiergerät ausgebildet. Dieses hat ein durch zwei miteinander verschraubbare Kunststoff-Gehäuseschalen 46, 47 gebildetes Gehäuse, an dem ein innen hohler Handgriff 48 ausgebildet ist. Im hohlen Inneren des Handgriffs können mindestens ein Akkumulator oder mindestens eine Batterie zur elektrischen Leistungsversorgung der Programmiereinrichtung vorgesehen sein. Am in Fig. 4 oberen Ende des Handgriffs 48 ist ein im wesentlichen zylindrischer Gehäusekopf 49 ausgebildet, dessen Achse im wesentlichen senkrecht zur Längsachse des Handgriffs 48 verläuft. Eine dem Bediener bei der Benutzung zugewandte ebene Rückseite 50 des Gehäusekopfes trägt eine Gruppe von Bedienelementen 51, die im Beispiel als flüssigkeitsdicht gegen das Gehäuse abgedichtete Druckknöpfe ausgebildet sind. Der Zustand des Gerätes ist über ein LCD-Anzeigefeld ablesbar. Auf der der Rückseite 50 abgewandten Vorderseite des Programmiergerätes befinden sich elektrische Kontakte in einer Programmiereinheits-Kontaktanordnung, die der Funktionseinheits-Kontaktanordnung entspricht. Dadurch kann die Steuereinheit in ein und derselben Weise durch Aufstecken sowohl mit der Funktionseinheit 10, als auch mit der Programmiereinheit 45 lösbar elektrisch leitend verbunden werden. Beim Programmieren der Steuerung gelangen zur Programmierung vorgesehene Steuersignale von der im Gehäuse 46, 47 untergebrachten Programmierelektronik über die ersten Kontaktmittel 35 der Steuereinrichtung zur Steuerung 23. Gleichzeitig ist die im Handgriff 48 untergebrachte Leistungsversorgung über mit den Steckkontakten 40 korrespondierende Steckzungen elektrisch mit der Steuerung 23 verbunden, so daß die Leistungsversorgung der Programmiereinheit gleichzeitig eine externe Leistungsversorgung für die Steuerung 23 der Steuereinheit 15 ist. Die Programmiereinheits-Kontaktanordnung ist durch einen am Gehäuseteil 47 ausgebildeten zylindrischen Ansatz 54 umschlossen, dessen Innenseite die gleiche Form und Dimension wie die Innenseite des Ansatzes 11 hat. Dadurch sind die während der Programmierung in Kontakt miteinander stehenden elektrischen Kontakte durch die Dichtung 18 an der Steuereinheit nach außen feuchtigskeitsdicht abgedichtet. Mit Vorteil sind somit die Kontaktbereiche von Programmiergerät und Magnetventil bei der gezeigten Ausführungsform zumindest hinsichtlich der elektrischen Kontaktanordnungen gleichgestaltet. Dies ist gegenüber einer gleichfalls möglichen separaten Kontaktierung der Energieversorgungskontakte einerseits und der Signalkontakte andererseits im Programmierzustand wegen der wesentlich einfacheren Handhabung von Vorteil.

Eine bevorzugte Ausführungsform der Erfindung sieht somit vor, nicht nur die Einheit von Ansteuerelektronik und Funktionseinheit, insbesondere elektromagnetischem Ventil, zu unterteilen in eine die funktionelle Einrichtung enthaltende Baugruppe sowie eine damit lösbar verbundene Steuerelektronik-Baugruppe. Es wird auch die bisherige Einheit von Programmierelektronik und Steuerelektronik aufgeteilt, indem neben der Steuerelektronik-Baugruppe eine separate Programmier-Baugruppe vorgesehen wird. Die elektrische Verbindung zwischen den Einheiten erfolgt über einander zugewandte Steckkontakte der Baugruppen. Die Steuerelektronik-Baugruppe ist an ihrer dem Ventil bzw. dem Programmiergerät abgewandten Seite vollständig geschlossen und bietet somit keinen Angriff für eindringende Feuchtigkeit. Eine die mechanische Verbindung der Baugruppen unterstützende umlaufende Dichtung schützt die elektrischen Kontakte gegen Feuchtigkeit und unterstützt gleichzeitig die kraftschlüssige mechanische Verbindung von Steuereinheit und Funktionseinheit und vorzugsweise auch von Steuereinheit und Programmiereinheit.

Durch die zweckmäßige Anpassung der separaten Programmiereinheit mindestens hinsichtlich der Kontaktanordnungen ist zusammen mit der von der Funktionseinheit vollständig lösbaren Steuereinheit ein einfach und sicher zu bedienendes System geschaffen, das insgesamt wirtschaftlich herstellbar ist und bei nur geringem Bedienungsaufwand mit vielen verschiedenen Programmen variabel einsetzbar ist. Das modulare System zeichnet sich weiterhin durch hervorragende Wartungs- und Reparaturfreundlichkeit aus.

## Patentansprüche

1. Vorrichtung zur programmgesteuerten Ausführung einer Funktion, insbesondere programmgesteuertes Ventil zur Steuerung eines Flüssigkeitsstromes in einer Wasserleitung einer Gartenbewässerungsanlage, mit einer mittels einer Programmiereinrichtung programmierbaren Steuerung zur Abgabe von Steuersignalen und mit einer durch die Steuersignale ansteuerbaren Einrichtung zur Ausführung der Funktion, wobei die Steuerung einer Steuereinheit (15) zugeordnet ist, die mechanisch und elektrisch lösbar mit einer die Einrichtung aufweisenden Funktionseinheit (10) verbindbar ist, **dadurch gekennzeichnet, daß** die Programmiereinrichtung einer Programmiereinheit (45) zugeordnet ist, die mechanisch und elektrisch lösbar mit der Steuereinheit (15) verbindbar ist.

2. Vorrichtung nach Anspruch 1, **dadurch gekennzeichnet, daß** die Steuereinheit (15) werkzeuglos mit der Funktionseinheit (10) und/oder mit der Programmiereinheit (45) verbindbar und/oder von der Funktionseinheit und/oder der Programmiereinheit (45) lösbar ist, wobei insbesondere die Steuereinheit (15) an oder in der Funktionseinheit (10) und/oder der Programmiereinheit (45) festklemmbar, insbesondere feststeckbar ist.

3. Vorrichtung nach einem der vorhergehenden Ansprüche, **dadurch gekennzeichnet, daß** zur kraftschlüssigen Halterung der Steuereinheit (15) an der Funktionseinheit (10) und/oder der Programmiereinheit (45) mindestens ein elastisches Element vorgesehen ist, insbesondere ein elastisch komprimierbares Dichtelement (18).

4. Vorrichtung nach einem der vorhergehenden Ansprüche, **dadurch gekennzeichnet, daß** die Steuereinheit (15) ein die Steuerung mindestens bereichsweise flüssigkeitsdicht umschließendes Gehäuse (16) hat, das vorzugsweise im wesentlichen aus Kunststoff besteht, wobei vorzugsweise das Gehäuse (16) mehrere, insbesondere zwei lösbar miteinander verbindbare, insbesondere miteinander verschraubbare Gehäuseteile (19, 21) hat.

5. Vorrichtung nach einem der vorhergehenden Ansprüche, **dadurch gekennzeichnet, daß** die Steuerung (23) insbesondere durch Verbindung der Gehäuseteile (19, 21) klemmend am Gehäuse (16) festlegbar ist.

6. Vorrichtung nach einem der vorhergehenden Ansprüche, **dadurch gekennzeichnet, daß** die Steuerung (23) im wesentlichen feuchtedicht versiegelt ist, wobei die Steuerung vorzugsweise als Leiterplatte (22) mit elektronischen Bauelementen ausgebildet ist, die von einer feuchtedichten Vergußmasse (24) umschlossen sind und/oder daß die Steuereinheit (15) mindestens ein Betätigungsglied (27) zur manuellen Schaltung der Steuerung hat, wobei das Betätigungsglied vorzugsweise als insbesondere flüssigkeitsdicht abgedichteter Tipp-Schalter ausgebildet ist.

7. Vorrichtung nach einem der vorhergehenden Ansprüche, **dadurch gekennzeichnet, daß** die Steuereinheit (15) erste Kontaktmittel (35) zur Herstellung einer lösbaren, signalleitenden ersten elektrischen Verbindung der Steuerung mit komplementären Kontaktmitteln der Einrichtung aufweist, wobei vorzugsweise die ersten Kontaktmittel (35) als Teil einer ersten Steckverbindung ausgebildet sind, vorzugsweise als Teil einer vorzugsweisen zweipoligen Koaxial-Steckverbindung (35).

8. Vorrichtung nach einem der vorhergehenden Ansprüche, **dadurch gekennzeichnet, daß** die Steuereinheit (15) keine eigene elektrische Leistungsversorgung für die Steuerung hat.

9. Vorrichtung nach einem der vorhergehenden Ansprüche, **dadurch gekennzeichnet, daß** die Steuereinheit (15) zweite Kontaktmittel (40) zur Herstellung einer lösbaren zweiten elektrischen Verbindung der Steuerung mit einer externen Leistungsversorgung hat, wobei vorzugsweise die zweiten Kontaktmittel als Teil einer vorzugsweise zweipoligen zweiten Steckverbindung ausgebildet sind, vorzugsweise als zum Zusammenwirken mit flachen Steckzungen ausgebildete Flach-Steckbuchsen (40).

10. Vorrichtung nach einem der vorhergehenden Ansprüche, **dadurch gekennzeichnet, daß** die Funktionseinheit (10) eine vorzugsweise netzunabhängige eigene Leistungsversorgung für die Einrichtung hat, die vorzugsweise mindestens einen Akkumulator umfaßt, wobei die Leistungsversorgung vorzugsweise in einem Gehäuse (6) der Funktionseinheit (10) angeordnet ist und/oder wobei die Leistungsversorgung elektrisch mit Kontaktmitteln verbunden ist, die zum Zusammenwirken mit den zweiten Kontaktmitteln (40) der Steuereinheit ausgebildet sind.

11. Vorrichtung nach einem der vorhergehenden Ansprüch, **dadurch gekennzeichnet, daß** die Programmeinheit (45) elektrische Kontaktmittel hat, die zum Zusammenwirken mit den ersten Kontaktmitteln (35) der Steuereinheit (15) ausgebildet sind.

12. Vorrichtung nach einem der vorhergehenden Ansprüche, **dadurch gekennzeichnet, daß** die Programmiereinheit (45) eine vorzugsweise netzunabhängige eigene Leistungsversorgung hat, insbesondere mindestens einen Akkumulator, wobei vorzugsweise die Leistungsversorgung der Programmiereinheit (45) elektrisch mit Kontaktmitteln verbunden ist, die zum Zusammenwirken mit den zweiten Kontaktmitteln (40) der Steuereinheit ausgebildet sind.

13. Vorrichtung nach einem der Ansprüche 7 bis 12, **dadurch gekennzeichnet, daß** die ersten Kontaktmittel (35) und die zweiten Kontaktmittel (40) der Steuereinheit (15) eine Steuereinheits-Kontaktanordnung bilden, die zum Zusammenwirken mit einer komplementären Funktionseinheits-Kontaktanordnung der Funktionseinheit (10) ausgebildet ist, wobei insbesondere die Programmiereinheit (45) eine Programmiereinheits-Kontaktanordnung aufweist, die der Funktionseinheits-Kontaktanordnung entspricht.

14. Vorrichtung nach einem der vorhergehenden Ansprüche, **dadurch gekennzeichnet, daß** die Programmiereinheit (45) als tragbares, vorzugsweise handgehaltenes Programmiergerät ausgebildet ist, vorzugsweise mit einem innen hohlen Handgriff (48), der zur Aufnahme mindestens eines Akkumulators oder mindestens einer Batterie ausgebildet ist.

15. Vorrichtung nach einem der Ansprüche 7 bis 14, **dadurch gekennzeichnet, daß** die erste elektrische Verbindung und die zweite elektrische Verbindung durch Relativbewegung der Steuereinheit (15) relativ zur Funktionseinheit (10) oder zu der Programmiereinheit (45) in eine gemeinsame Verbindungsrichtung lösbar oder herstellbar ist, insbesondere durch eine im wesentlichen geradlinige Steckbewegung in einer gemeinsamen Steckrichtung und/oder daß die erste elektrische Verbindung und/oder die zweite elektrische Verbindung in verbundenem Zustand von Steuereinheit (15) und Funktionseinheit (10), und vorzugsweise auch von Steuereinheit (15) und Programmiereinheit (45), flüssigkeitsdicht abgedichtet ist, vorzugsweise durch eine die erste und die zweite elektrische Verbindung gemeinsam umschließende Dichteinrichtung (18).

16. Vorrichtung nach einem der Ansprüche 4 bis 15, **dadurch gekennzeichnet, daß** an dem Gehäuse (16) der Steuereinheit (15) ein hülsenförmiger, vorzugsweise zylindrischer Ansatz (17) ausgebildet ist, der die ersten Kontaktmittel (35) und die zweiten Kontaktmittel (40) umgibt und der zur Bildung eines die erste Verbindung und die zweite Verbindung feuchtigkeitsdicht umschließenden Kontaktraumes mit einem hülsenförmigen, vorzugsweise zylindrischen Ansatz (11; 54) der Funktionseinheit oder der Programmiereinheit (45) verbindbar ist, insbesondere durch Ineinanderstecken der Ansätze in einer Zusammensteckrichtung, wobei insbesondere die Zusammensteckrichtung parallel zur Steckrichtung der ersten und zweiten Kontaktmittel verläuft und/oder wobei mindestens ein die Außenseite (4) des Ansatzes (17) der Steuereinheit umschließender Dichtring (18) vorgesehen ist, der zur flüssigkeitsdichten Anpressung an die Innenseite des Ansatzes (11; 54) der Funktionseinheit (10) oder der Programmiereinheit (45) vorgesehen ist.

17. Vorrichtung nach einem der vorhergehenden Ansprüche, **dadurch gekennzeichnet, daß** die Einrichtung ein elektromagnetisch betätigbares Flüssigkeitsventil (4) ist, das vorzugsweise fest mit einer Wasserleitung eines fest installierten Leitungssystems einer Gartenbewässerungsanlage verbunden ist.

## Claims

1. Apparatus for the program-controlled performance of a function, particularly a program-controlled valve for controlling a liquid flow in a water pipe of a garden watering installation, with a control programmable by means of a programming device for emitting control signals and with a device for performing the function controllable by the control signals, the control being associated with a control unit (15), which is mechanically and electrically detachably connectable to a functional unit (10) having said device, **characterized in that** the programming device is associated with a programming unit (45), which is mechanically and electrically detachably connectable to the control unit (15).

2. Apparatus according to claim 1, **characterized in that** the control unit (15) is, without tools, connectable to the functional unit (10) and/or to the programming unit (45) and/or is detachable from the functional unit and/or the programming unit (45) and in particular the control unit (15) can be clamped, more particularly plugged onto or into the functional unit (10) and/or the programming unit (45).

3. Apparatus according to one of the preceding claims, **characterized in that** for the non-positive holding of the control unit (15) on the functional unit (10) and/or programming unit (45) at least one elastic element is provided, particularly an elastically compressible sealing element (18).

4. Apparatus according to one of the preceding claims, **characterized in that** the control unit (15) has a casing (16) at least zonally surrounding the control in liquid-tight manner and which is preferably essentially made from plastic and preferably the casing (16) has several, particularly two casing parts (19, 20) detachably connectable to one another and which can in particular be screwed together.

5. Apparatus according to one of the preceding claims, **characterized in that** the control (23) can be secured in clamping manner to the casing (16), more particularly by the connection of the casing parts (19, 21).

6. Apparatus according to one of the preceding claims, **characterized in that** the control (23) is sealed in a substantially damp-proof manner, the control preferably being constructed as a printed circuit board (22) with electronic components, which are surrounded by a damp-proof sealing compound (24) and/or that the control unit (15) has at least one actuator (27) for the manual switching of the control, the actuator preferably being constructed as a liquid-tight sealed keying switch.

7. Apparatus according to one of the preceding claims, **characterized in that** the control unit (15) has first contact means (35) for producing a detachable, signal-conducting, first, electrical connection of the control to complimentary contact means of the device and preferably the first contact means (35) are constructed as part of a plug connection, preferably as part of a preferably two-pin coaxial plug connection (35).

8. Apparatus according to one of the preceding claims, **characterized in that** the control unit (15) does not have its own electric power supply for the control.

9. Apparatus according to one of the preceding claims, **characterized in that** the control unit (15) has second contact means (40) for producing a detachable, second, electrical connection of the control to an external power supply and preferably the second contact means are constructed as part of a preferably two-pin, second plug connection, preferably as flat connector sockets (40) constructed to cooperate with flat plugging tongues.

10. Apparatus according to one of the preceding claims, **characterized in that** the functional unit (10) has preferably its own, mains-independent power supply for the device, which preferably comprises at least one accumulator, the power supply preferably being located in a casing (6) of the functional unit (10) and/or in which the power supply is electrically connected to contact means, which are constructed to cooperate with the second contact means (40) of the control unit.

11. Apparatus according to one of the preceding claims, **characterized in that** the programming unit (45) has electrical contact means constructed for cooperating with the first contact means (35) of the control unit (15).

12. Apparatus according to one of the preceding claims, **characterized in that** the programming unit (45) preferably has its own mains-independent power supply, particularly at least one accumulator and preferably the power supply of the programming unit (45) is electrically connected to contact means constructed to cooperate with the second contact means (40) of the control unit.

13. Apparatus according to one of the claims 7 to 12, **characterized in that** the first contact means (35) and second contact means (40) of the control unit (15) form a control unit contact arrangement constructed for cooperating with a complimentary functional unit contact arrangement of the functional unit (10) and in particular the programming unit (45) has a programming unit contact arrangement corresponding to the functional unit contact arrangement.

14. Apparatus according to one of the preceding claims, **characterized in that** the programming unit (45) is constructed as a portable, preferably hand-held programmer, preferably with an inner, hollow handle (48), which is constructed for receiving at least one accumulator or at least one battery.

15. Apparatus according to one of the claims 7 to 14, **characterized in that** the first electrical connection and the second electrical connection can be detached or produced by relative movement of the control unit (15) with respect to the functional unit (10) or the programming unit (45) in a common connecting direction, particularly by a substantially linear plugging movement in a common plugging direction and/or that the first electrical connection and/or the second electrical connection in the connected state of control unit (15) and functional unit (10) and preferably also control unit (15) and programming unit (45), is sealed in liquid-tight manner, preferably by a sealing device (18) jointly surrounding the first and second electrical connections.

16. Apparatus according to one of the claims 4 to 15, **characterized in that** on the casing (16) of the control unit (15) is constructed a sleeve-like, preferably cylindrical lug (17), which embraces the first contact means (35) and the second contact means (40) and which, for forming a contact space surrounding the first connection and the second connection in damp-proof manner is connectable to a sleeve-like, preferably cylindrical lug (11, 54) of the functional unit or the programming unit (45), particularly by plugging into one another the lugs in an assembly direction and in particular the assembly direction is parallel to the plugging direction of the first and second contact means and/or in which at least one sealing ring (18) surrounding the outside (4) of the lug (17) of the control unit is provided and serves for the liquid-tight pressing onto the inside of the lug (11, 54) of the functional unit (10) or the programming unit (45).

17. Apparatus according to one of the preceding claims, **characterized in that** the device is an electromagnetically operable liquid valve (4), which is preferably firmly connected to a water pipe of a fixed installed pipe system of a garden watering installation.

## Revendications

1. Dispositif pour l'exécution commandée par programme d'une fonction, notamment soupape commandée par programme pour le contrôle d'un écoulement de fluide dans une conduite d'eau dans un système d'irrigation pour jardins, avec un système de commande programmable par un moyen de programmation, pour l'émission de signaux de commande et avec un moyen pour l'exécution d'une fonction, pouvant être commandé au moyen des signaux de commande, le système de commande étant associée à une unité de commande (15), laquelle peut être raccordée de manière mécaniquement et électriquement amovible avec une unité fonctionnelle (10), qui présente le moyen, **caractérisé en ce que** le moyen de programmation est associé à une unité de programmation (45), laquelle peut être raccordée de manière mécaniquement et électriquement amovible avec l'unité de commande (15).

2. Dispositif d'après la revendication 1, **caractérisé en ce que** l'unité de commande (15) peut être raccordée sans outils avec l'unité fonctionnelle (10) et/ou avec l'unité de programmation (45) et/ou qu'elle est amovible de l'unité fonctionnelle et/ou de l'unité de programmation (45), l'unité de commande (15) pouvant notamment être bloquée et en particulier enfichée de manière fixe auprès de ou dans l'unité fonctionnelle (10) et/ou l'unité de programmation (45).

3. Dispositif d'après une des revendications précédentes, **caractérisé en ce que** pour le support à engagement par adhérence de l'unité de commande (15) auprès de l'unité fonctionnelle (10) et/ou de l'unité de programmation (45) est prévu au moins un élément élastique, notamment un élément d'étanchement (18) élastiquement compressible.

4. Dispositif d'après une des revendications précédentes, **caractérisé en ce que** l'unité de commande (15) présente un boîtier (16), entourant la commande au moins dans certains domaines de manière étanche aux liquides, lequel est composé de préférence essentiellement de matière plastique, le boîtier (16) présentant de préférence plusieurs, notamment deux éléments de boîtier (19, 21), pouvant être raccordés, notamment vissés entre eux de manière démontable.

5. Dispositif d'après une des revendications précédentes, **caractérisé en ce que** la commande (23) peut être fixée par serrage au boîtier (16) notamment par le raccordement des éléments de boîtier (19, 21).

6. Dispositif d'après une des revendications précédentes, **caractérisé en ce que** la commande (23) est scellée de manière essentiellement étanche aux liquides, la commande étant réalisée de préférence en tant que circuit imprimé (22) avec des composantes électroniques encloses par une masse de scellement (24) étanche aux liquides et/ou **en ce que** l'unité de commande (15) présente au moins un élément d'actionnement (27) pour l'actionnement manuel de la commande, l'élément d'actionnement étant réalisé de préférence en tant que contact à impulsion notamment étanché de manière imperméable aux liquides.

7. Dispositif d'après une des revendications précédentes, **caractérisé en ce que** l'unité de commande (15) présente des premiers moyens de contact (35) pour la réalisation d'un premier raccord électrique amovible pour la conduction des signaux, de la commande avec des moyens de contact complémentaires du moyen, les premiers moyens de contact (35) étant réalisés de préférence en tant que partie d'un premier connecteur par fiches, de préférence en tant que partie d'un connecteur coaxial (35) de préférence bipolaire.

8. Dispositif d'après une des revendications précédentes, **caractérisé en ce que** l'unité de commande (15) n'a pas d'alimentation en puissance électrique propre pour la commande.

9. Dispositif d'après une des revendications précédentes, **caractérisé en ce que** l'unité de commande (15) présente des deuxièmes moyens de contact (40) pour la réalisation d'un deuxième raccord électrique amovible de la commande avec un moyen d'alimentation en puissance extérieur, les deuxièmes moyens de contact étant réalisés en tant que partie d'un deuxième connecteur par fiches de préférence bipolaire, de préférence en tant que prises femelles plates (40) réalisées pour s'associer avec des languettes d'enfichage plates.

10. Dispositif d'après une des revendications précédentes, **caractérisé en ce que** l'unité fonctionnelle (10) présente pour le moyen une alimentation en puissance propre de préférence indépendante du réseau, laquelle comprend de préférence au moins un accumulateur, l'alimentation, en puissance étant disposée de préférence dans un boîtier (6) de l'unité fonctionnelle (10) et/ou l'alimentation en puissance étant raccordée électriquement avec des moyens de contact, réalisés pour s'associer avec les deuxièmes moyens de contact (40) de l'unité de commande .

11. Dispositif d'après une des revendications précédentes, **caractérisé en ce que** l'unité de programmation (45) présente des moyens de contact électriques réalisés pour s'associer avec des premiers moyens de contact (35) de l'unité de commande (15).

12. Dispositif d'après une des revendications précédentes, **caractérisé en ce que** l'unité de programmation (45) présente une alimentation en puissance propre de préférence indépendante du réseau, notamment au moins un accumulateur, l'alimentation en puissance de l'unité de programmation (45) étant de préférence raccordée électriquement avec des moyens de contact réalisés pour s'associer avec les deuxièmes moyens de contact (40) de l'unité de commande.

13. Dispositif d'après une des revendications de 7 à 12, **caractérisé en ce que** les premiers moyens de contact (35) et les deuxièmes moyens de contact (40) de l'unité de commande (15) forment une configuration de contacts d'unité de commande, réalisée pour concourir avec une configuration de contacts d'unité fonctionnelle complémentaire de l'unité fonctionnelle (10), l'unité de programmation (45) présentant notamment une configuration de contacts d'unité de programmation, qui correspond à celle de la configuration de contacts d'unité fonctionnelle.

14. Dispositif d'après une des revendications précédentes, **caractérisé en ce que** l'unité de programmation (45) est réalisée en tant qu'appareil de programmation portable, de préférence à la main, de préférence avec une poignée (48) creuse à l'intérieur, qui est réalisée de manière à pouvoir loger au moins un accumulateur ou au moins une batterie.

15. Dispositif d'après une des revendications de 7 à 14, **caractérisé en ce que** le premier raccord électrique et le deuxième raccord électrique peut être produit et défait par un mouvement relatif de l'unité de commande (15) par rapport à l'unité fonctionnelle (10) ou par rapport à l'unité de programmation (45) dans une direction de raccordement commune, notamment par un mouvement d'enfichage essentiellement rectiligne dans une direction d'enfichage commune et/ou **en ce que** le premier raccord électrique et/ou le deuxième raccord électrique est étanché de manière imperméable aux liquides dans l'état branché de l'unité de commande (15) avec l'unité fonctionnelle (10), et de préférence également de l'unité de commande (15) avec l'unité de programmation (45), de préférence par un moyen d'étanchement (18) qui enclot ensemble le premier et le deuxième raccord électrique.

16. Dispositif d'après une des revendications de 4 à 15, **caractérisé en ce que** sur le boîtier (16) de l'unité de commande (15) est réalisé un embout (17) de préférence cylindrique en forme de douille, lequel enclot les premiers moyens de contact (35) et les deuxièmes moyens de contact (40) et lequel peut être raccordé pour la formation d'un espace de contact, entourant le premier raccord e le deuxième raccord de manière étanche aux liquides, avec un embout (11 ; 54), de préférence cylindrique et en forme de douille, de l'unité fonctionnelle ou de l'unité de programmation (45), notamment par emboîtement des embouts dans une direction d'assemblage, la direction d'assemblage s'étendant notamment parallèlement à la direction d'enfichage des premiers et des deuxièmes moyens de contact et/ou au moins un joint annulaire (18), entourant la face extérieure (4) de l'embout (17) de l'unité de commande, étant prévu pour le serrage étanche aux liquides à la face intérieure de l'embout (11 ; 54) de l'unité fonctionnelle (10) ou de l'unité de programmation (45).

17. Dispositif d'après une des revendications précédentes, **caractérisé en ce que** l'appareillage est une soupape hydraulique (4) pouvant être actionnée de manière électromagnétique, laquelle est de préférence raccordée de manière fixe avec une conduite d'eau d'un système de conduite installé de manière fixe d'un système d'irrigation pour jardins.
